Europäisches Patentamt

European Patent Office

Office européen des brevets

(11) Publication number: **0 575 961 A2**

## EUROPEAN PATENT APPLICATION

(21) Application number: **93109955.0**

(22) Date of filing: **22.06.93**

(51) Int. Cl.⁵: **C01D 3/02**

(30) Priority: **23.06.92 US 902633**

(43) Date of publication of application:
**29.12.93 Bulletin 93/52**

(84) Designated Contracting States:
**CH DE ES FR GB IT LI NL**

(71) Applicant: **DOWELANCO**
**9002 Purdue Road**
**Indianapolis, Indiana 46268-1189(US)**

(72) Inventor: **Friese, David D.**
**1313 San Jose Drive**
**Antioch, California 94509(US)**
Inventor: **Applebury, Terril E.**
**989 Kelley Court**
**Lafayette, California 94549(US)**

(74) Representative: **Huber, Bernhard, Dipl.-Chem.**
**et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08**
**20**
**D-81635 München (DE)**

(54) **Preparation of potassium and cesium fluorides.**

(57) Potassium and cesium fluoride are prepared from aqueous potassium or cesium chloride, respectively, by reaction of the latter with an aqueous solution of fluorosilicic acid to obtain potassium or cesium fluorosilicate, thermally decomposing the dried potassium or cesium fluorosilicate to evolve silicon tetrafluoride and leave the desired potassium or cesium fluoride as a residue, and dissolving the evolved silicon tetrafluoride in water to generate recyclable aqueous fluorosilicic acid.

EP 0 575 961 A2

The present invention relates to the preparation of potassium fluoride and cesium fluoride from other potassium and cesium salts.

Potassium and cesium chloride are often obtained as by-products in fluoride/chloride exchange processes and these and many other inorganic potassium and cesium salts are readily available from other sources. Potassium and cesium fluorides, however, are much more valuable as chemical reagents in organic chemical processes and for other applications than are potassium or cesium chloride or most other inorganic salts of these metals. Potassium and cesium fluorides are typically prepared by neutralizing an aqueous solution of the corresponding metal hydroxide or carbonate with hydrogen fluoride (Kirk-Othmer, Encyclopedia of Chemical Technology, Second Edition, Volume 9, page 649). This method is simple and effective, but it requires that the available potassium or cesium salt be converted to its hydroxide or carbonate as a part of the process and requires the use of hydrogen fluoride, which is relatively expensive and is hazardous to transport. Accordingly, new and improved processes for converting inorganic potassium and cesium salts to potassium and cesium fluoride, respectively, are of great interest.

It has now been found that water soluble potassium and cesium salts can be converted directly to potassium fluoride and cesium fluoride, respectively, using fluorosilicic acid as the source of the fluoride rather than hydrogen fluoride. The process can be operated in a cyclic manner so that substantially all of the fluoride present in the fluorosilicic acid is utilized. Fluorosilicic acid is cheap, plentiful, and convenient to transport.

The invention includes a process for converting a water soluble potassium or cesium salt to potassium or cesium fluoride, respectively, which process is characterized by:

a) combining an aqueous solution of the water soluble potassium or cesium salt with an aqueous solution of fluorosilicic acid to obtain a reaction mixture containing potassium or cesium fluorosilicate;

b) recovering and drying the potassium or cesium fluorosilicate obtained;

c) heating the dried potassium or cesium fluorosilicate above its decomposition point to evolve silicon tetrafluoride and leave potassium or cesium fluoride as a residue;

d) recovering the residual potassium or cesium fluoride;

e) dissolving the evolved silicon tetrafluoride in water to generate aqueous fluorosilicic acid; and

f) recycling the generated aqueous fluorosilicic acid to step a).

It is preferred to employ potassium or cesium chloride as the water soluble salt starting material.

The process is particularly valuable for the recovery and recycle of the potassium or cesium of potassium or cesium chloride obtained as a by-product in fluoride/chloride exchange reactions employing potassium or cesium fluoride as a reagent.

The process of the present invention can be used to convert water soluble potassium or cesium salts, such as potassium or cesium chloride to potassium or cesium fluoride, respectively, using fluorosilicic acid as the fluoride source. The process is characterized by three chemical steps; the formation of a potassium or cesium fluorosilicate salt, the thermal decomposition of this salt, and the conversion of the co-product silicon tetrafluoride to fluorosilicic acid by dissolving it in water. The process is further characterized by several operational steps, such as recovery and drying steps, and includes the recycle of the fluorosilicic acid produced.

The chemical steps of the process are illustrated below wherein M represents potassium or cesium.

$$2 \ MCl(aq) \ + \ H_2SiF_6(aq) \rightarrow M_2SiF_6(s) \ + \ 2 \ HCl(aq)$$
$$M_2SiF_6(s) \rightarrow 2 \ MF(s) \ + \ SiF_4(g)$$
$$3 \ SiF_4(g) \ + \ 2 \ H_2O \rightarrow 2 \ H_2SiF_6(aq) \ + \ SiO_2(s)$$

The preparation of potassium and cesium fluorosilicate by treatment of an aqueous solution of the corresponding water soluble salts with aqueous fluorosilicic acid is known in the art. The information in the Kirk-Othmer, Encyclopedia of Chemical Technology, Second Edition, Volume 9, page 655 summarizes much of this knowledge. The process is, further, described in U.S. Patent 2,556,064, issued June 5, 1951. The reaction proceeds quickly and easily and the potassium and cesium fluorosilicates formed, which are sparingly soluble in aqueous media, form a precipitate.

A water soluble salt is defined for the purposes of this invention as a salt that is soluble in water to the extent of at least 10 g per 100 g of water at ambient temperature. Suitable salts include chlorides, bromides, acetates, phosphates, sulfates, and the like. Potassium and cesium chlorides are typically preferred.

Aqueous potassium or cesium chloride solutions containing from 1 percent up to saturated solutions can be employed. It is usually advantageous to employ cesium chloride solutions containing at least 30 percent cesium chloride. The optimum concentration of potassium chloride to employ, however, usually

2

depends on the method of recovery of the potassium fluorosilicate produced to be employed. When filterable crystals are desired, solutions containing less than about 5 percent potassium chloride are often preferred and when an evaporative method is employed, solutions containing at least 10 percent are usually preferred. Aqueous fluorosilicic acid solutions containing from about 3 percent of the acid up to saturated solutions can be employed. The commercially available 20 to 35 percent aqueous solution is usually preferred. The theoretical amount of fluorosilicic acid, which is one mole for every two moles of potassium or cesium fluoride, or an amount in excess of this is typically employed. Excesses of up to nearly 100 percent have been employed with success.

The reaction requires essentially no special equipment other than the materials of construction, which must be resistant to corrosion, and takes place at essentially any temperature from 0°C to 110°C, the freezing and boiling points of the aqueous media. It is often convenient to conduct this process step at ambient temperature, especially with cesium fluorosilicate. The crystals of potassium fluorosilicate obtained, however, are better defined and more readily recovered when the temperature is maintained between 70°C and 90°C. Some type of agitation, such as stirring, is generally employed to facilitate mixing. The size of the crystals of potassium and cesium fluorosilicate in the precipitate can often be increased by heating the mixtures obtained with agitation.

The precipitated potassium and cesium fluorosilicates can be recovered by any of the many standard procedures, such as by evaporation of the volatile materials present (water, hydrogen chloride by-product, and any residual fluorosilicic acid), filtration, centrifugation, decantation, and the like. Centrifugation is often preferred in some circumstances. The collected precipitate is typically washed with water or a saturated solution of the contained fluorosilicate salt. In other circumstances it is preferred to recover the fluorosilicate salt by evaporation of the volatile materials present in the mixture.

The fluorosilicate salts obtained can be dried by any of many standard procedures, such as air drying and heating at a temperature below their decomposition points. Drying by heating at temperatures of from 100°C to 400°C is often preferred. It is usually preferred to dry the salt until there is less than 1 percent of water remaining. Residual water causes the formation of silica in the later steps of the process. The drying is generally facilitated by employing the salt in a form having a large surface area, such as small crystals or powder. The drying step is often carried out in conjunction with the subsequent thermal decomposition step.

The thermal decomposition of potassium and cesium fluorosilicates to obtain potassium and cesium fluoride, respectively, is known in the art, for example, in Kirk-Othmer, Encyclopedia of Chemical Technology, Second Edition, Volume 9, page 659. The reaction is carried out by heating the fluorosilicate salt to a temperature above its decomposition point and removing the silicon tetrafluoride that forms as a gas. The residue is potassium or cesium fluoride. Temperatures of 500°C to 1000°C are typically employed. Temperatures between 600°C and 900°C are often preferred. The reaction is advantageously carried out under reduced pressure to help remove the silicon tetrafluoride. Pressures of between 0.1 atmosphere (10 kPa (kiloPascals)) and atmospheric pressure (100 kPa) are suitable. The passage of a dry, inert gas, such as nitrogen or argon, through the reactor is also beneficial. Some type of agitation is usually beneficial and it is usually desirable that the cesium or potassium fluorosilicate be in a finely divided or a molten form.

The desired potassium or cesium fluoride, which remains as a residue of the thermal decomposition, can be recovered by conventional means. It can then be used directly as a chemical reagent or can be taken up in water and purified before use and can be reprecipitated to obtain a more desirable crystal form or size.

The silicon tetrafluoride that evolves can, after removal from the reactor, be collected by standard means for later absorption into water or can be absorbed directly into water to convert it to fluorosilicic acid. In either case, the silicon tetrafluoride is typically introduced into the water by means of a tube that extends beneath the surface of the water and possesses a diffusion device on the outlet, by means of a Venturi scrubber, or by means of a spray tower. The absorption can be made to take place at any temperature between 0°C and 100°C, the freezing and boiling points of the water. It is typically done at ambient temperature. Absorption can be continued until a concentration of fluorosilicic acid of up to 20 to 35 percent is achieved. It is often advantageous to form an essentially saturated solution. The by-product silicon dioxide is removed by filtration, centrifugation, or decantation. The conversion of silicon tetrafluoride to fluorosilicic acid is described in Kirk-Othmer, Encyclopedia of Chemical Technology, Second Edition, Volume 9, page 652.

The aqueous fluorosilicic acid solution obtained as a co-product is employed as the aqueous fluorosilicic acid reagent required in the first step of the process in a subsequent batch. This recycle of fluorosilicic acid makes it possible to utilize substantially all of the fluoride present in the fluorosilicic acid employed and is an important aspect of the invention.

The process of the present invention is especially useful for converting potassium and cesium chloride to potassium and cesium fluoride, respectively. This embodiment of the invention, when employed in conjunction with an organic fluoride/chloride exchange process, such as the preparation of 3,5-dichloro-2,4,6-trifluoropyridine from pentachloropyridine or the preparation of 2,6-difluoro-benzonitrile from 2,6-dichlorobenzonitrile by treatment with potassium fluoride or cesium fluoride, provides a means of recycling the potassium or cesium in the process.

EXAMPLES

Example 1 - Preparation of Potassium Fluorosilicate.

Method A

Potassium chloride (11.2 g (grams), 0.15 mol (mole)) was dissolved in 50 mL (milliliters) of water and the resulting solution was added to 50 mL of 29.7 percent aqueous fluorosilicic acid (specific gravity 1.25, 0.13 mol) at ambient temperature with stirring in a 250 mL polyfluoroethylene lined flask equipped with a concentric shell polyfluoroethylene lined condenser and an infrared heating lamp. The mixture was heated to boiling (about 110°C) and the by-product hydrogen chloride, water, and residual fluorosilicic acid were removed by flash distillation. The 15.9 g (96 percent of theory) residue was potassium fluorosilicate containing less than 200 ppm potassium chloride as determined by X-ray fluorescence and X-ray diffraction analysis.

Method B

A solution containing 3.84 g (0.051 mol) of potassium chloride dissolved in 124 mL of water was prepared in an Erlenmeyer flask and heated to 85°C. The hot solution was added slowly with stirring to 9.5 mL of 29.7 percent aqueous fluorosilicic acid (specific gravity 1.25, 0.025 mol) at 85°C with stirring. A precipitate formed. The mixture was allowed to cool and was then vacuum filtered in an in-line PFA filter holder containing a 47 mm (millimeter) diameter 2-3 micron filter using a polyfluoroethylene lined diaphragm pump equipped with two liquid traps in-line with the filter. The solids recovered were dried in a vacuum oven at 160°C to obtain 4.79 g (89 percent of theory) of potassium fluorosilicate.

Example 2 - Preparation of Cesium Fluorosilicate.

Method A

Cesium chloride (73.4 g, 0.44 mol) was dissolved in 100 mL of water and the resulting solution was added to 100 mL of 29.7 percent aqueous fluorosilicic acid (specific gravity 1.25, 0.26 mol) at ambient temperature with stirring in a 250 mL polyfluoroethylene lined flask equipped with a concentric shell polyfluoroethylene lined condenser and an infrared heating lamp. The mixture was heated to boiling (about 110°C) and the by-product hydrogen chloride, water, and residual fluorosilicic acid were removed by flash distillation. The 81.7 g (91 percent of theory) residue was cesium fluorosilicate as determined by X-ray diffraction analysis.

Method B

A solution containing 20.0 g (0.118 mol) of cesium chloride dissolved in 30 mL of water was prepared in an Erlenmeyer flask and heated to 85°C. The hot solution was added slowly with stirring to 26 mL of 29.7 percent aqueous fluorosilicic acid (specific gravity 1.25, 0.067 mol) at 85°C with stirring. A precipitate formed. The mixture was allowed to cool and was then vacuum filtered in an in-line PFA filter holder containing a 47 mm diameter 2-3 micron filter using a polyfluoroethylene lined diaphragm pump equipped with two liquid traps in-line with the filter. The solids recovered were dried in a vacuum oven at 170°C to obtain 20.8 g (90 percent of theory) of cesium fluorosilicate.

Example 3 - Thermal Decomposition of Potassium Fluorosilicate.

A static reactor was constructed from a 6 inch (15.2 cm) by 0.5 inch (1.3 cm) piece of monel tubing. The reactor was equipped with a removable 4.5 ampere Hoskins Electrical furnace with the capability of heating to 1000°C; a 300 Series LOVE® Controller with J-type thermocouples and the capability to control

4

temperatures up to 860°C; a pressure gauge to measure the pressure in the reactor; a nitrogen gas inlet port with provisions for preheating the nitrogen, a rotometer to measure its flow and a pressure gauge to measure its pressure; a gas outlet port connected to two sealed tetrafluoroethylene lined containers with electrical magnetic stirrers which were loaded with 1 percent aqueous sodium hydroxide solution to absorb the co-product silicon tetrafluoride; and a tetrafluoroethylene lined diaphragm vacuum pump. All of the tubing in heated portions of the apparatus were monel and all the fittings were 316 stainless steel.

The reactor segment of the reactor was loaded with a weighed amount of potassium fluorosilicate and the system was closed. The nitrogen flow rate was set to the desired rate (measured at ambient temperature) and the reactor furnace was removed and heated to the desired temperature. The pressure was reduced to the desired level by means of the vacuum pump. The hot furnace was then placed on the reactor and the temperature adjusted to the desired temperature. After the desired length of time the reactor was allowed to cool and was disassembled. The material remaining in the reactor was collected, weighed, and analyzed by inductively coupled plasma analysis. The results of several runs are summarized in the following table.

Thermal Decomposition of Potassium Fluorosilicate

| Run | Temp., °C | N₂ flow rate, mL/min | Press., kPa | Time, Hours | Init. Wt., g | Final Wt., g | Analysis %F | Analysis %K | Analysis %Si | Calc. unreacted % | Calc. yield, % |
|-----|-----------|----------------------|-------------|-------------|--------------|--------------|-------------|-------------|--------------|-------------------|----------------|
| 1 | 700 | 150 | 16 | 16 | 2.66 | 1.57 | 34.1 | 66.5 | 0.57 | 4.5[1] | 95 |
| 2 | 700 | 150 | 100 | 21 | 2.66 | 2.00 | 46.2 | 50.5 | 8.8 | 69[1] | 31 |
| 3 | 720 | 150 | 16 | 25 | 4.07 | 1.95 | 33.4 | 66.0 | 1.0 | 7.9[1] | 92 |
| 4 | 750 | 150 | 100 | 20 | 3.22 | 1.91 | 46.2 | 48.5 | 1.3 | 10[1] | 90 |
| 5 | 780 | 150 | 100 | 21 | 2.84 | 1.79 | 31.9 | 58.6 | 1.2 | 9.4[1] | 91 |
| 6 | 800 | 50 | 100 | 3.5 | 3.00 | 2.23 | | | | 53[2] | 47 |
| 7 | 800 | 50 | 100 | 3 | 2.00 | 1.49 | | | | 46[2] | 54 |
| 8 | 800 | 50 | 100 | 16 | 1.34 | 0.72 | | | | 2[2] | 98 |

[1] From the percentage of Si; 12.7% = 0% unreacted, 0.0% = 100% unreacted
[2] From the loss in weight; 47.3% = 0% unreacted, 0.0% = 100% unreacted

## Claims

1. A process for converting a water soluble potassium or cesium salt to potassium or cesium fluoride, respectively, which process is characterized by:

a) combining an aqueous solution of the water soluble potassium or cesium salt with an aqueous solution of fluorosilicic acid to obtain a reaction mixture containing potassium or cesium fluorosilicate;

b) recovering and drying the potassium or cesium fluorosilicate obtained;

c) heating the dried potassium or cesium fluorosilicate above its decomposition point to evolve silicon tetrafluoride and leave potassium or cesium fluoride as a residue;

d) recovering the residual potassium or cesium fluoride;

e) dissolving the evolved silicon tetrafluoride in water to generate aqueous fluorosilicic acid; and

f) recycling the generated aqueous fluorosilicic acid to step a).

2. A process according to Claim 1 wherein the water soluble potassium or cesium salt is potassium chloride.

3. A process according to Claim 1 wherein the water soluble potassium or cesium salt is cesium chloride.

4. A process according to Claim 1 wherein, in step c) the potassium or cesium fluorosilicate is heated to between 600°C and 900°C.

5. A process according to Claim 1 wherein step c) is carried out at a pressure above 10 kPa and below 100 kPa (atmospheric pressure).

6. A process according to Claim 1 wherein step c) is carried out with the passage of an inert gas through the reactor.

7. A process according to Claim 1 wherein in step b) the potassium or cesium fluorosilicate is recovered by centrifugation or filtration.

8. A process according to Claim 1 wherein in step b) the potassium or cesium fluorosilicate is recovered by evaporation of the volatile components of the reaction mixture.